# FASCICULE DE BREVET EUROPEEN

(11) **EP 0 494 583 B1**
(45) Date de publication et mention de la délivrance du brevet: **13.09.1995**
(21) Numéro de dépôt: 91830289.4
(22) Date de dépôt: 28.06.1991
(51) Int. Cl.: A47C 31/11

(54) **Housses de siège avant et arrière de véhicule automobile**
Sitzüberzüge für Vorder- und Hinterstühle in Kraftfahrzeugen
Seat covers for front and rear motor vehicle seats

(30) Priorité: 07.01.1991 IT FI910002 U
(43) Date de publication de la demande: 15.07.1992
(73) Titulaire: C.A. MASI s.n.c. di Carlo e Antonio MASI, I-50013 Campi Bisenzio (Firenze) (IT)
(72) Inventeur: Masi, Antonio, I-50013 Campi Bisenzio (Firenze) (IT)
(74) Mandataire: Martini, Lazzaro

(56) Documents cités:
- EP-A- 0 226 159
- FR-A- 1 363 244
- US-A- 2 817 391
- US-A- 3 892 440

## Description

La présente invention concerne un ensemble de housses de siège, c'est-à-dire respectivement pour un siège avant et pour celui arrière d'un véhicule automobile.

Il est connu que toutes les housses de siège pour véhicules automobiles, du type avec housse enveloppante, connues aujourd'hui sont munies de rubans élastiques et de crochets qui sont destinés à être accrochés dans une position invisible; ceci est obtenu généralement par accrochage aux ressorts sous le siège, c'est-à-dire là où ils peuvent être atteints. Une telle housse avec crochets est connu du document US-A-3 892 440.
Mais l'opération d'accrochage, qui doit être effectuée lors de la première mise en place et par la suite chaque fois qu'il s'avère nécessaire d'enlever la housse, est particulièrement incommode et parfois même difficile pour les plus inexpérimentés; par ailleurs, pour réussir à couvrir toute la surface visible des sièges et des dossiers, et donc également les côtés et le bord avant du siège et le bord supérieur du dossier, même avec différentes dimensions, les housses connues aujourd'hui sont réalisées en tissu souple et éventuellement avec de larges zones en tissu élastique; mais ceci a pour conséquence que la housse ne conserve pas, après une utilisation répétée et prolongée, son aspect initial bien tendu, mais elle est soumise à des déplacements qui déterminent la formation de faux-plis qui sont extrêmement déplaisant au regard et fastidieux pour l'utilisateur.

Le premier et princial but de la présente invention est d'éliminer les inconvénients précités.

Ce résultat a été atteint conformément à l'invention en réalisant une housse selon les revendications 1, 4 et 6. Des caractéristiques particulières sont prévues dans les revendications 2, 3, 5, 7, 8 et 9.

Les avantages obtenus grâce à la présente invention consistent essentiellement dans le fait que la housse adhère avec précision au siège et au dossier en suivant leurs courbes; que la rigidité du tissu est telle qu'elle évite la formation de faux-plis; qu'une même taille est applicable aux sièges d'un grand nombre de véhicules automobiles de type et de marque différents et donc de dimensions différentes; que l'application et l'enlèvement sont simples et rapides du fait de la suppression des crochets métalliques.

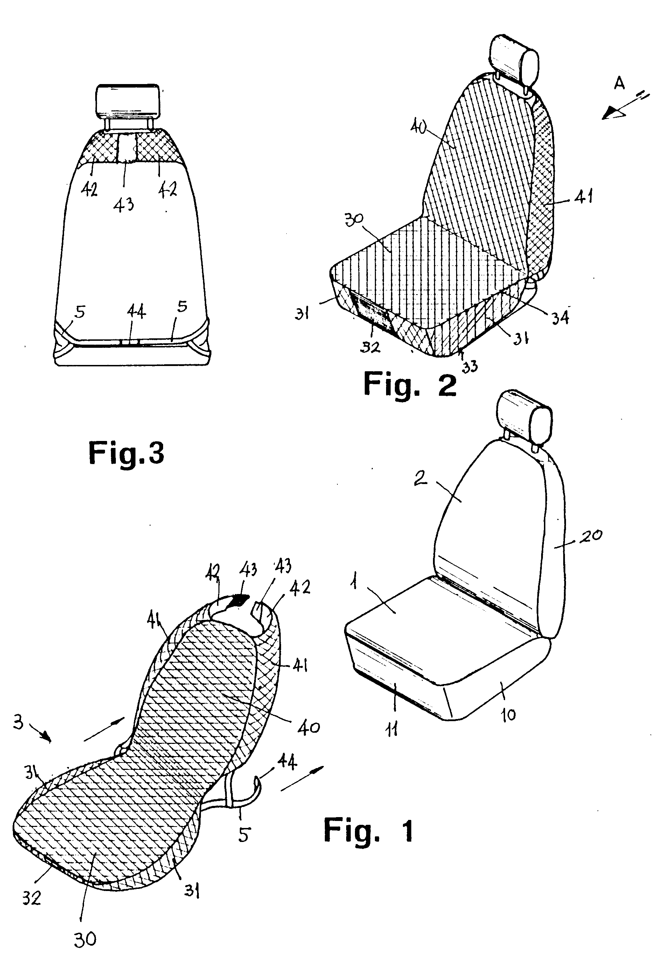

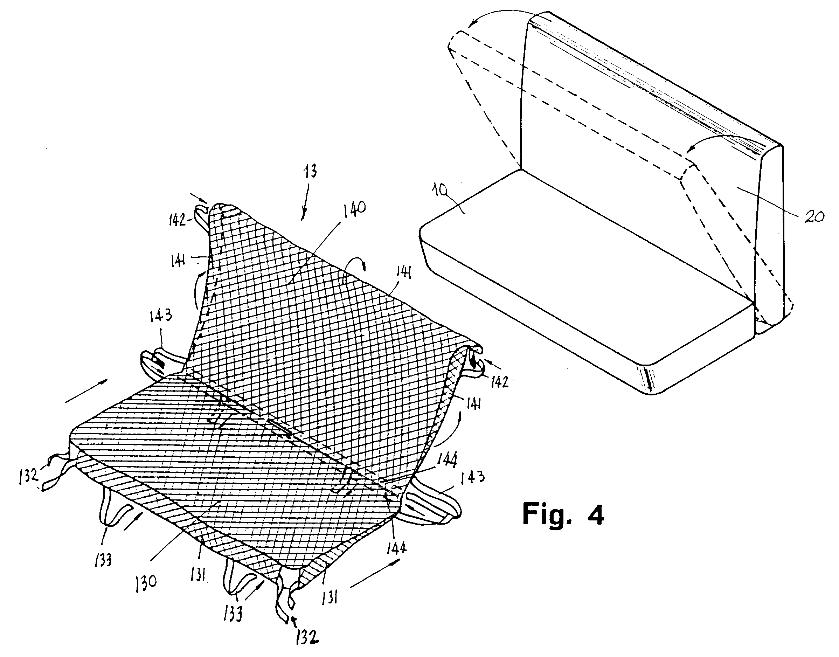

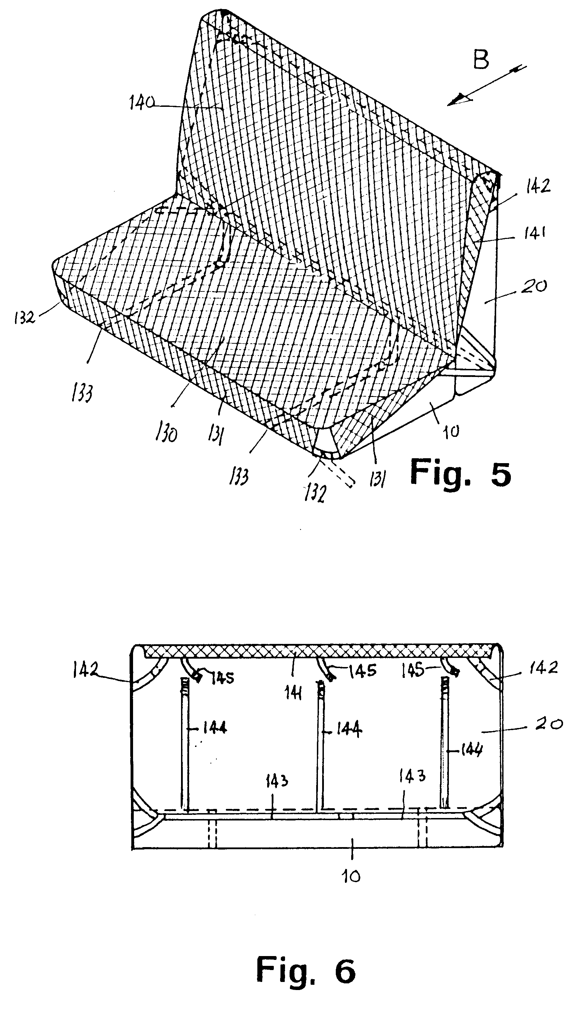

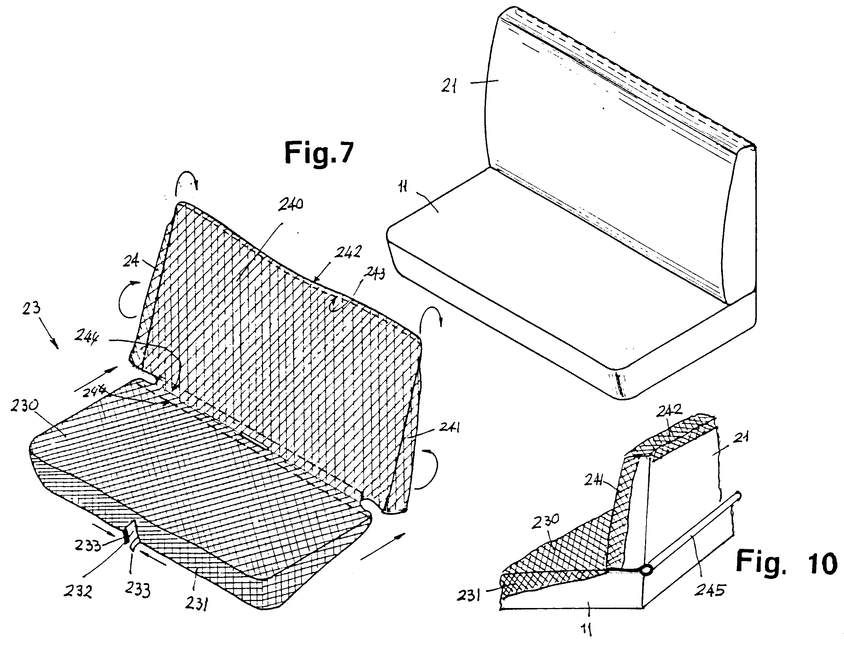

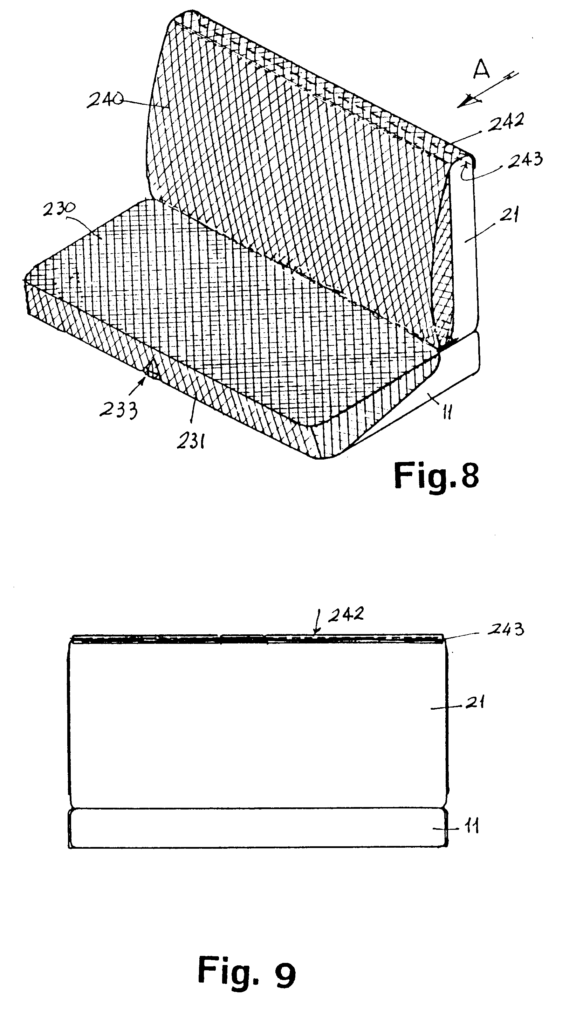

Ces avantages et caractéristiques ainsi que d'autres seront plus et mieux compris de chaque homme du métier à la lumière de la description qui va suivre et à l'aide des dessins annexés donnés à titre d'exemples pratiques du modèle, mais à ne pas considérer dans le sens limitatif; dessins sur lesquels: la FIG. 1 représente une vue éclatée d'une housse pour le siège avant d'un véhicule automobile, conformément à l'invention; la FIG. 2 représente la vue de côté oblique de la housse de siège de la Fig. 1 en position d'utilisation; la FIG. 3 représente la vue de derrière de la housse de la Fig. 2; la FIG. 4 représente la vue éclatée d'une housse pour siège arrière à abattant, selon l'invention; la FIG. 5 représente la vue de côté oblique de la housse de siège de la Fig. 4 en position d'utilisation; la FIG. 6 représente la vue de derrière de la housse de la Fig. 5; la FIG. 7 représente la vue éclatée d'une housse pour siège arrière fixe, selon l'invention; la FIG. 8 représente la vue de côté oblique de la housse de siège de la Fig. 7 en position d'utilisation; la FIG. 9 représente la vue de derrière de la housse de la Fig. 8; la FIG. 10 représente la vue détaillée du mode de fixation de la housse de la Fig. 7.

Réduite à sa structure essentielle et en référence aux Fig. 1 à 3 des dessins annexés, une housse pour un siège avant de véhicule automobile, conformément à l'invention, est constituée par une housse 3 d'un seul morceau, avec une partie 30 destinée à couvrir le siège 1 proprement dit et une partie 40 destinée à couvrir le dossier 2.
La partie 30 qui est destinée à couvrir le siège proprement dit, comprend deux pans 31 tombants symétriques qui sont destinés à couvrir respectivement les côtés 10 et une bonne partie du bord avant 11 du siège 1. Ces pans 31 ont une hauteur qui correspond à celle des côtés et du bord avant du siège et présentent un développement du bord inférieur 33 légèrement inférieur à celui du bord supérieur 34 afin d'assurer la stabilité de la housse et empêcher tout déplacement vers le haut. Cette stabilité est augmentée par la mise en traction des deux pans 31 au moyen d'une portion de tissu élastique 32 unie par le haut à la housse et qui unit et tend horizontalement les extrémités opposées des pans 31 à proximité du milieu du bord avant du siège. Avantageusement ladite portion de tissus 32 est en double pour dèlimiter une poche porte-objets, ouverte supèrieurement.

La partie 40 qui est destinée à couvrir le dossier 2 comprend deux pans latéraux 41 qui sont destinés à couvrir les côtés 20 du dossier avec deux appendices 42 qui se prolongent sur l'arrière du dossier pour y être fixés ensemble au moyen de deux bandes "velcro" 43 entourant étroitement le sommet du dossier et dont la longueur est telle qu'elle permette une faculté d'adaptation facile sur des dossiers de différentes dimensions.
A la base inférieure des parts 41 et à l'extrémité postérieure des pans 31 sont fixés deux éléments élastiques 5 qui sont destinés à tendre et maintenir sur le siège les deux parties 30 et 40 de la housse 3 lorsqu'ils sont passés, en les tendant, derrière le dossier 2 et fixés ensemble au moyen de deux portions terminales 44 de bande "velcro". Avantageusement, ladite housse 3 est réalisée en tissu épais et de préférence doublé et piqué.

Conformément à l'invention, à la place de la portion de tissu élastique 32 précitée destinée à unir et à tendre frontalement les extrémités opposées des pans tombants 31, il est prévu d'utiliser deux portions de tissu élastique en correspondance des deux angles antérieurs du siège de manière à unir et à tendre le part tombant avant avec les deux pans tombants latéraux de la housse 3. Par ailleurs, à la place dudit tissu élastique 32, il est possible d'utiliser deux bandes "velcro" permettant de tendre et fixer ensemble les deux parts 31; ces deux bandes "velcro" pourront être prévues aussi en correspondance des angles avant du siège en remplacement ou en combinaison avec une portion de tissu élastique 32 correspondante.

En référence aux Fig. 4 à 6 des dessins annexés, une housse pour siège arrière à abattant de véhicule automobile, conformément à l'invention, est constituée par une housse 13 d'un seul morceau de tissu épais, de préférence doublé et piqué, avec une partie 130 destinée à couvrir le siège 10 proprement dit et une partie 140 qui est destinée à couvrir le dossier 20. La partie 130 qui est destinée à couvrir le siège proprement dit comprend trois pans tombants 131 qui sont destinés à couvrir, respectivement, les côtés et le bord avant du siège 10, en laissant découvertes deux zones réduites en correspondance des angles du bord avant; les extrémités opposées des pans 131 en correspondance desdits angles sont munies de bandes "velcro" 132 qui permettent de tendre et fixer ensemble lesdits parts lorsque la partie 130 de la housse a été positionnée sur le siège et les rubans élastiques 133 avec les extrémités en bande "velcro" ont été tendus et fixés ensemble en les passant sous le siège 10. Comme alternative à ces bandes "velcro" 132, il est prévu d'utiliser une portion de tissu élastique.

De manière analogue, la partie 140 de la housse 13 qui est destinée à couvrir le dossier 20 comprend trois pans 141 qui sont destinés à couvrir les côtés et le bord supérieur du dossier et donc à être tendus et fixés ensemble au moyen de deux bandes "velcro" 142 prévues en correspondance aux extrémités opposées des pans 141 et dont la longueur est telle qu'elle permette une faculté d'adaptation facile à des dossiers de différentes épaisseurs: deux paires de bandes élastiques 143 réunies en une seule bande et avec l'extrémité libre en bande "velcro" sont prévues en outre pour être tendues et fixées ensembles en les passant derrière le dossier pour permettre de tendre et maintenir en place les extrémité des pans 141 en correspondance de la zone où le dossier et le siège se rejoignent.
Avantageusement trois bandes elastiques 144 verticales sont appliquèes derrière le dossier 20 avec l'extrémité supérieure en "velcro" pour être tendues et fixées aux bandes correspondantes 145 en "velcro" du pan 141 qui couvre le bord supérieur du dossier.

Comme alternative à ces bandes "velcro" 142, il est prévu d'utiliser une portion de tissu élastique de même hauteur que les parts 141.
Par ailleurs, de manière symétrique par rapport à la ligne de connexion des parties 230 et 240, la housse est munie vers l'arrière d'une bande 244 de largeur suffisante, d'un matériau non glissant (par exemple un tissu en caoutchouc-mousse) étendue à toute la largeur de la housse et destinée à être introduite, avec un léger forçage d'une main, dans la fente existant entre le siège et le dossier et à permettre ainsi - en adhérant au siège et au dossier - de maintenir la housse correctement adhérente au siège et au dossier.

En référence aux Fig. 7 à 9 des dessins annexés, une housse pour siège arrière fixe de véhicule automobile, conformément à l'invention, est constituée par une housse 23 d'un seul morceau de tissu épais, de préférence doublé et piqué, avec une partie 230 destinée à couvrir le siège 11 proprement dit et une partie 240 qui est destinée à couvrir le dossier 21. La partie 230 qui est destinée à couvrir le siège comprend un pan tombant 231 pour couvrir les côtés et le bord avant du siège: en correspondance du milieu du bord avant, ledit pan tombant présente une entaille 232 en forme de V à l'envers avec deux bandes "velcro" 233 pour permettre de tendre et maintenir en place les deux sections de part tombant 231 après que la partie 230 de la housse a été montée sur le siège 11.

Comme alternative, il est possible d'utiliser les modalités de constructions déjà décrites pour la housse pour siège arrière à abattant.

La partie 240 de la housse qui est destinée à couvrir le dossier 21 est munie de deux pans latéraux 241 qui sont destinés à couvrir au moins en partie les côtés du dossier et d'un pan supérieur 242 destiné à couvrir le bord supérieur du dossier et à être fixé par l'arrière à celui-ci au moyen d'une paire de bandes "velcro" dont une 243, qui s'étend sur toute la largeur de la housse, est fixée par le bas au bord du morceau supérieur 242 et l'autre est préalablement fixée par derrière au sommet du dossier.
Sur les côtés opposés de la ligne de liaison des parties 230 et 240 de la housse 23 est prévue une bande 244 de matériau non glissant, tout comme déjà décrit pour la housse pour siège arrière à abattant.

Comme alternative à ladite bande 244 de matériau non dérapant, il est prévu d'utiliser une baguette 245 de quelques cm de diamètre correctement fixée à la housse et de longueur égale à la largeur de celle-ci, et qui est destinée à être introduite dans la fente entre le siège et le dossier et poussée dedans jusqu'à ce qu'elle dépasse la fin du siège de manière telle que, une fois la baguette introduite, la housse ne puisse plus se détacher du siège.

## Revendications

1. Housse de siège avant de véhicule automobile comprenant une housse (3) en un seul morceau avec une partie (30) destinée à couvrir le siège (1) proprement dit et une partie (40) destinée à couvrir le dossier (2), la partie (30) de la housse destinée à couvrir le siège (1) étant munie de pans (31) qui sont destinés à couvrir les côtés (10) et le bord avant (11) du siège (1) et qui possèdent un bord inférieur (33) de longueur inférieure à celle du bord supérieur (34) pour assurer la stabilité de la housse (3) contre tout déplacement vers le haut et la partie (40) de la housse (3) destinée à couvrir le dossier (2) étant munie de deux pans latéraux (41) qui sont destinés à couvrir les côtés (20) du dossier (2) et qui sont prolongés de manière telle qu'ils permettent d'entourer le sommet du dossier (2) et d'être fixés ensemble dans cette position, mais de manière amovible, caractérisée en ce qu'une portion de tissu élastique (32) et/ou une paire de bandes "velcro" unit deux à deux lesdits pans (31) de la partie (40) de la housse (3) destinée à couvrir le siège (1) et effectue leur mise en traction et en ce que les pans latéraux (41) sont fixés ensemble au moyen de bandes "velcro" (43) de longueur telle qu'elle permette à la housse (3) de bien s'adapter à des dossiers (2) de différentes dimensions.

2. Housse de siège selon la revendication 1, caractérisée en ce que ledit tissu élastique (32) pour la mise en traction des pans tombants (31) de la partie (30) de la housse (3) qui couvre le siège (1) proprement dit est prévu en correspondance de chacun des angles antérieurs du siège (1).

3. Housse de siège selon la revendication 1 caractérisée en ce que ledit tissu élastique (32) qui unit les pans tombants (31) de la partie (30) de la housse (3) qui couvre le siège (1) proprement dit est double pour délimiter une poche ouverte supérieurement.

4. Housse pour siège arrière à abattant de véhicule automobile comprenant une housse (3) en un seul morceau avec une partie (130) destinée à couvrir le siège (10) proprement dit et une partie (140) destinée à couvrir le dossier (20), la partie (130) de la housse destinée à couvrir le siège (10) étant munie de trois pans tombants (131) qui sont destinés à couvrir respectivement les côtés et le bord avant du siège (10) et qui sont reliés entre eux deux à deux, en position tendu, et la partie (140) de la housse (13) destinée à couvrir le dossier (20) étant munie de trois pans (141) qui sont destinés à couvrir respectivement les côtés et le bord supérieur du dossier (20) et qui sont reliés entre eux deux à deux en position tendue, mais de manière amovible, caractérisée en ce que les trois pans tombants (131) de la partie (130) de la housse (13) destinée à couvrir le siège (10) sont reliés entre eux, de manière amovible, au moyen d'une paire de bandes "velcro" (132) prévue en correspondance des angles antérieurs du siège (20) et/ou d'une portion de tissu élastique fixé à la housse (13) et aux extrémités opposées desdits pans (131), et en ce que les trois pans (141) de la partie (140) de la housse (13) destinée à couvrir le dossier (20) sont reliés entre eux au moyens d'une paire de bandes "velcro" (142) prévues en correspondance des extrémités opposées desdits pans (141).

5. Housse de siège selon la revendication 4 caractérisé en ce qu'elle comprend plusieures bandes élastiques verticales (144) avec une extrémité fixée derrière le dossier (20) et avec l'autre extremité en "velcro" pour fixer les bandes en "velcro" correspondantes (145) du part de la housse (13) qui couvre le bord superieur du dossier (20).

6. Housse pour siège arrière fixe de véhicule automobile comprenant une housse (23) en un seul morceau avec une partie (230) destinée à couvrir le siège (11) proprement dit et une partie (240) destinée à couvrir le dossier (21), la partie (230) de la housse (23) destinée à couvrir le siège (11) étant munie d'un pan tombant continu (231) et la partie (240) de la housse (23) destinée à couvrir le dossier (21) étant munie de trois pans, deux latéraux (241) et un supérieur (242), pour couvrir respectivement les côtés et le bord supérieur du dossier (21), caractérisée en ce que le pan tombant continu (231) de la partie (230) de la housse (23) destinée à couvrir le siège (11) présente au moins une entaille (232) avec deux bandes "velcro" (233) et/ou une portion de tissu élastique pour permettre de relier, en position tendue, deux à deux les selections de pan (231), et en ce que le pan supérieur (242) de la partie (240) de la housse (23) destinée à couvrir le dossier (21) est destiné à être fixé de manière amovible derrière le bord supérieur du dossier (21) au moyen d'une paire de bandes "velcro" (243) qui s'étendent sur toute la largeur du dossier (21), l'une de ces bandes "velcro" (243) étant préablement fixé au bas dudit pan (242) et celle conjuguée étant destinée à être préalablement fixée sur l'arrière du bord supérieur du dossier (21).

7. Housse de siège selon les revendications 4 et 6, caractérisée en ce que la housse (13,23) est pourvue par derrière d'au moins deux bandes (244) de matériau non glissant, étendues à toute la largeur du siège (10,11) et disposées de manière symétrique par rapport à la ligne de liaison des deux parties de la housse (13,23) pour permettre après introduction de la zone de housse correspondante dans la fente existant entre le siège (10,11) et le dossier (20,21), leur adhérence au siège (10,11) et au dossier (20,21) respectivement.

8. Housse de siège selon la revendication 7 caractérisée en ce qu'en remplacement desdits bandes (244) de mantériau non glissant, la housse (23) est pourvue d'une baguette (245) qui est destinée à être introduite dans la fente existant entre le siège (11) et le dossier (21) et passée au-delà de la fin du siège (11) de manière à empêcher sa rétraction spontanée.

9. Housse pour siège avant et arrière d'un véhicule automobile selon les revendications précédentes caractérisée en ce que ladite housse (3,13,23) est réalisée en tissu épais, de préférence doublé et piqué.

## Claims

1. Front seat cover for an automobile consisting of a cover (3) in one piece with a part (30) intended to cover the seat (1) itself and a part (40) intended to cover the back of the seat (2), the part (30) of the cover intended to cover the seat (1) being provided with panels (31) which are intended to cover the sides (10) and the front edge (11) of the seat (1) and which have a lower edge (33) of shorter length than that of the upper edge (34) to ensure the stability of the cover (3) against displacement upwards and the part (40) of the cover (3) intended to cover the back of the seat (2) being provided with two lateral panels (41) which are intended to cover the sides (20) of the back of the seat (2) and which are extended in such a way that they enclose the top of the back of the seat (2) and can be fixed together in this position, in an immovable way, characterised in that the one part of the elastic fabric (32) and/or a pair of 'Velcro' bands unite the said panels (31) of part (40) of the cover (3) intended to cover the seat (1), two by two, and put them in traction and that the lateral panels (4) are fixed together by means of 'Velcro' bands (43) of such a length that they enable the cover (3) to adapt to backs of different dimensions.

2. Seat cover according to Claim 1, characterized in that the said elastic fabric (32) to put the bottom panels (3) of part (30) of the cover (3) which covers the seat (1) itself into traction is provided corresponding to each of the front angles of the seat (1).

3. Seat cover according to Claim 1, characterized in that the said elastic fabric (32) which unites the bottom panels (31) of the part (30) of the cover which covers the seat (1) itself is double to provide an open upper pocket.

4. Loose rear seat cover for an automobile consisting of a cover (3) in one piece with one part (130) intended to cover the seat (10) itself and one part (140) intended to cover the back of the seat (20), the part (130) of the cover the seat (10) being provided with three bottom panels (131), which are intended to cover the sides and the front edge respectively of the seat (10) and which are connected together, two by two, in a held position, and the part (140) of the cover (13) intended to cover the back of the seat (20) being provided with three panels (144) which are intended to cover the sides and the upper edge respectively of the back of the seat (20) and which are connected together, two by two, in a held position, in an immovable way, characterized in that the three bottom panels (131) of the part (130) of the cover (13) intended to cover the seat (10) are connected together in an immovable way by means of a pair of 'Velcro' bands (132) provided corresponding to the front angles of the seat (20) and/or by a piece of elastic fabric fixed to the cover (13) and at the opposite extremes of the said panels (131) and in that the three panels (141) of the part (140) of the cover (13) intended to cover the back of the seat (20) are connected together by means of a pair of 'Velcro' bands (142) provided corresponding to the opposite extremes of the said panels (141).

5. Seat cover according to Claim 4, characterized in that it includes several vertical elastic bands (144) with one end fixed at the rear of the back of the seat (20) and with the other end in 'Velcro' in order to fix the corresponding 'Velcro' bands (145) of the part of the cover (13) which covers the upper edge of the back of the seat (20).

6. Fixed rear seat cover for an automobile consisting of a cover (23) in one piece with one part (230) intended to cover the seat (11) itself and one part (240) intended to cover the back of the seat (21), the part (230) of the cover (23) intended to cover the seat (11) being provided with a continuous bottom part (231) and the part (240) of the cover (23) intended to cover the back of the seat (21) being provided with three panels, two lateral ones (241) and one upper one (242), to cover the sides and the upper edge respectively of the back of the seat (21), characterized in that the continuous bottom part (231) of the part (230) of the cover (23) intended to cover the back of the seat (11) presents at least one cut (232), with two 'Velcro' bands (233) and/or one piece of elastic fabric to enable one to connect the sections of panel (231), two by two, and in that the upper panel (242) of the part (240) of the cover (23) intended to cover the back of the seat (21) is intended to be fixed in an immovable way behind the upper edge of the back of the seat (21) by means of a pair of 'Velcro' bands (243), being first fixed at the bottom of the said panel (242) and this combination being intended to be first fixed at the back of the upper edge of the back of the seat (21).

7. Seat cover according to Claims 4 and 6, characterized in that the cover (13,23) is provided at the rear with at least two bands (244) of non-slipping material, over the whole width of the seat (10,11) and arranged symmetrically relative to the connecting line of the two parts of the cover (13,23), so that after introduction of the zone of the corresponding cover into the gap existing between the seat (10,11) and the back of the seat (20,21), their adherence to the seat (10,11) and to the back of the seat (20,21) is made possible.

8. Seat cover according to Claim 7 characterised in that as the replacement of the said bands of non-slipping material, the cover (23) is provided with a strip (245), which is intended to be introduced into the gap existing between the seat (11) and the back of the seat (21) and passed to the end of the seat (11) so as to prevent its spontaneous retraction.

9. Cover for front and rear seat of a car according to the preceding claims characterized in that the cover (3,13,23) is made of thick fabric, preferably double and stitched.

## Patentansprüche

1. Schonbezug für den Vordersitz eines Kraftfahrzeuges, der einen aus einem einzigen Stück bestehenden Bezug (3) umfaßt, der einen Teil (30) zum Bedecken des eigentlichen Sitzes (1) und einen Teil (40) zum Bedecken der Rückenlehne (2) aufweist, wobei der zum Bedecken des Sitzes (1) bestimmte Teil (30) des Bezuges mit Ansatzstücken (31) versehen ist, die dazu bestimmt sind, die Seiten (10) und den vorderen Rand (11) des Sitzes (1) zu bedecken, und die einen unteren Rand (33) besitzen, dessen Länge kleiner ist als die des oberen Randes (34), um die Stabilität des Bezuges (3) gegen jegliches Verschieben nach oben sicherzustellen, und wobei der zum Bedecken der Rückenlehne (2) bestimmte Teil (40) des Bezuges (3) mit zwei seitlichen Ansatzstücken (41) versehen ist, die dazu bestimmt sind, die Seiten (20) der Rückenlehne (2) zu bedecken, und die derart verlängert sind, daß sie es ermöglichen, den oberen Bereich der Rückenlehne (2) zu umschließen und aneinander in dieser Position in lösbarer Weise befestigt zu werden, dadurch **gekennzeichnet**, daß ein Teil aus elastischem Gewebe (32) und/oder ein Paar von "Velcro"-Bändern die Ansatzstücke (31) des zum Bedecken des Sitzes (1) bestimmten Teils (40) paarweise verbindet und sie unter Zugspannung setzt, und daß die seitlichen Ansatzstücke (41) aneinander mit Hilfe von "Velcro"-Bändern (43) befestigt werden, die eine solche Länge besitzen, daß sie es dem Bezug (3) ermöglichen, sich gut an Rückenlehnen mit unterschiedlichen Abmessungen anzupassen.

2. Schonbezug nach Anspruch 1, dadurch **gekennzeichnet**, daß das elastische Gewebe (32), das dazu dient, die nach unten gehenden Ansatzstücke (31) des zum Bedecken des eigentlichen Sitzes (1) dienenden Teils (30) des Bezuges (3) unter Zugspannung zu setzen, im Bereich einer jeden der vorderen Ecken des Sitzes (1) vorgesehen ist.

3. Schonbezug nach Anspruch 1, dadurch **gekennzeichnet**, daß das elastische Gewebe (32), das die nach unten gehenden Ansatzstücke (31) des Teils (30) des Bezugs (3), der den eigentlichen Sitz (1) bedeckt, miteinander verbindet, doppellagig ist, um eine nach oben offene Tasche zu umschließen.

4. Schonbezug für den hinteren mit einer umklappbaren Lehne versehenen Sitz eines Kraftfahrzeuges, der einen aus einem einzigen Stück bestehenden Bezug (13) umfaßt, der einen Teil (130) zum Bedecken des eigentlichen Sitzes (10) und einen Teil (140) zum Bedecken der Rückenlehne (20) aufweist, wobei der zum Bedecken des Sitzes (10) bestimmte Teil (130) des Bezuges mit drei nach unten gehenden Ansatzstücken (131) versehen ist, die dazu bestimmt sind, die Seiten bzw. den vorderen Rand des Sitzes (10) zu bedecken und die in der gespannten Position paarweise miteinander verbunden sind, und wobei der zum Bedecken der Rückenlehne (20) bestimmte Teil (140) des Bezuges (13) mit drei Ansatzstücken (141) versehen ist, die dazu bestimmt sind, die Seiten bzw. den oberen Rand der Rückenlehne (20) zu bedecken und die in der gespannten Position paarweise aber lösbar miteinander verbunden sind, dadurch **gekennzeichnet**, daß die drei nach unten gehenden Ansatzstücke (131) des zum Bedecken des Sitzes (10) bestimmten Teils (130) des Bezuges (13) miteinander in lösbarer Weise vermittels eines Paares von "Velcro"-Bändern (132) verbunden sind, die entsprechend den vorderen Ecken des Sitzes (20) vorgesehen sind, und/oder vermittels eines Teils aus elastischem Gewebe, das am Bezug (13) und an den gegenüberliegenden Enden der Ansatzstücke (131) befestigt ist, und daß die drei Ansatzstücke (141) des zum Bedecken der Rückenlehne (20) bestimmten Teils (140) des Bezuges (13) miteinander vermittels eines Paares von "Velcro"-Bändern (142) verbunden sind, die entsprechend den einander gegenüberliegenden Enden dieser Ansatzstücke (141) vorgesehen sind.

5. Schonbezug nach Anspruch 4, dadurch **gekennzeichnet**, daß er mehrere vertikale elastische Bänder (144) umfaßt, deren eines Ende hinter der Rückenlehne (20) befestigt ist und deren anderes Ende aus "Velcro" besteht, um die entsprechenden "Velcro"-Bänder (145) des Teils des Bezuges (13) daran zu befestigen, der den oberen Rand der Rückenlehne (20) bedeckt.

6. Schonbezug für den festen Rücksitz eines Kraftfahrzeuges, der einen aus einem einzigen Stück bestehenden Bezug (23) umfaßt, der einen Teil (230) zum Bedecken des eigentlichen Sitzes (11) und einen Teil (240) zum Bedecken der Rückenlehne (21) aufweist, wobei der zum Bedecken des Sitzes (11) bestimmte Teil (230) des Bezuges (23) mit einem durchgehenden, nach unten verlaufenden Ansatzstück (231) und der zum Bedecken der Rückenlehne (21) bestimmte Teil (240) des Bezuges (23) mit drei Ansatzstücken, nämlich zwei seitlichen Ansatzstücken (241) und einem oberen Ansatzstück (242) versehen ist, um die Seiten bzw. den oberen Rand der Rückenlehne (21) zu bedecken, dadurch **gekennzeichnet**, daß das durchgehende, sich nach unten erstreckende Ansatzstück (231) des zum Bedecken des Sitzes (11) bestimmten Teils (230) des Bezuges (23) wenigstens einen Ausschnitt (232) mit zwei "Velcro"-Bändern (233) und/oder einem Teil aus einem elastischen Gewebe aufweist, um es zu ermöglichen, in der gespannten Position die Teilstücke des Ansatzstückes (231) paarweise zu verbinden, und daß das obere Ansatzstück (242) des zum Bedecken der Rückenlehne (21) bestimmten Teils (240) des Bezugs (23) dazu bestimmt ist, in lösbarer Weise hinter dem oberen Rand der Rückenlehne (21) vermittels eines Paares von "Velcro"-Bändern (243) befestigt zu werden, die sich über die gesamte Länge der Rückenlehne (21) erstrecken, wobei eines dieser "Velcro"-Bänder (243) zuvor unten an dem besagten Ansatzstück (242) befestigt worden ist und das hiermit zu verbindende dazu bestimmt ist, zuvor an der Rückseite des oberen Randes der Rückenlehne (21) befestigt zu werden.

7. Schonbezug nach den Ansprüchen 4 und 6, dadurch **gekennzeichnet**, daß der Bezug (13, 23) an seiner Rückseite mit wenigstens zwei Bändern (244) aus rutschfestem Material versehen ist, die sich über die ganze Breite des Sitzes (10, 11) erstrecken und in symmetrischer Weise bezüglich der Verbindungslinie der beiden Teile des Bezuges (13, 23) angeordnet sind, um ihr Festhaften am Sitz (10, 11) bzw. an der Rückenlehne (20, 21) zu ermöglichen, nachdem der entsprechende Bereich des Bezuges in den Schlitz eingeführt worden ist, der zwischen dem Sitz (10, 11) und der Rückenlehne (20, 21) vorhanden ist.

8. Schonbezug nach Anspruch 7, dadurch **gekennzeichnet**, daß anstelle der Bänder (244) aus rutschfestem Material der Bezug (23) mit einem Stab (245) versehen ist, der dazu bestimmt ist, in den Schlitz eingeführt zu werden, der zwischen dem Sitz (11) und der Rückenlehne (21) vorhanden ist, und der über das Ende des Sitzes (11) hinaus in der Weise durchgeschoben ist, daß sein spontanes Zurückgleiten verhindert wird.

9. Schonbezug für den vorderen und hinteren Sitz eines Kraftfahrzeuges nach einem der vorhergehenden Ansprüche, dadurch **gekennzeichnet**, daß der Bezug (3, 13, 23) aus einem festen Gewebe hergestellt ist, das vorzugsweise gefüttert und abgesteppt ist.
